(19) Europäisches Patentamt
European Patent Office
Office européen des brevets

(11) Veröffentlichungsnummer: **0 395 968 A1**

(12) # EUROPÄISCHE PATENTANMELDUNG

(21) Anmeldenummer: **90107592.9**

(51) Int. Cl.[5]: **C07F 9/6512, A01N 57/02**

(22) Anmeldetag: **21.04.90**

(30) Priorität: **04.05.89 DE 3914714**

(43) Veröffentlichungstag der Anmeldung:
**07.11.90 Patentblatt 90/45**

(84) Benannte Vertragsstaaten:
**BE CH DE FR GB IT LI NL**

(71) Anmelder: **BAYER AG**
**D-5090 Leverkusen 1 Bayerwerk(DE)**

(72) Erfinder: **Maurer, Fritz, Dr.**
**Roeberstrasse 8**
**D-5600 Wuppertal 1(DE)**
Erfinder: **Hartwig, Jürgen, Dr.**
**Franz-Esser-Strasse 44**
**D-5090 Leverkusen 3(DE)**
Erfinder: **Becker, Benedikt, Dr.**
**Versuchsstation für Planzenschutz**
**I-39050 Pineta di Laives, Steinmannhof(IT)**

(54) **Pyrimidinyl(thiono)(thiol)-phosphor(phosphon)säure(amid)ester.**

(57) Die Erfindung betrifft neue Pyrimidin(thiono)(thiol)-phosphor(phosphon)säure(amid)ester der allgemeinen Formel (I)

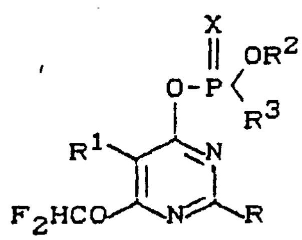

(I)

in welcher
R für Wasserstoff, oder für einen gegebenenfalls substituierten Rest der Reihe Alkyl, Alkoxy, Alkylthio, Dialkylamino, Cycloalkyl und Aryl steht,
$R^1$ für Wasserstoff, Alkyl oder Halogen steht,
$R^2$ für Alkyl steht,
$R^3$ für Alkyl, Alkoxy, Alkylthio, Amino, Alkylamino, Dialkylamino oder Aryl steht und
X für Sauerstoff oder Schwefel steht.
welche als Schädlingsbekämpfungsmittel verwendet werden können.

EP 0 395 968 A1

## Pyrimidinyl(thiono)(thiol)-phosphor(phosphon)säure(amid)ester

Die Erfindung betrifft neue Pyrimidinyl(thiono)(thiol)-phosphor(phosphon)säure(amid)ester, mehrere Verfahren zu ihrer Herstellung und ihre Verwendung als Schädlingsbekämpfungsmittel, insbesondere als Insektizide, Akarizide und Nematizide.

Es ist bereits bekannt, daß bestimmte Pyrimidinylthionophosphor(phosphon)säureester, wie z.B. 0,0-Diethyl-0-(6-methyl-2-i-propyl-pyrimidin-4-yl)-thionophosphorsäureester und 0-(6-Methoxy-2-t-butyl-pyrimidin-4-yl)-0-methyl-thionoethanphosphonsäurediester pestizid wirksam sind (vgl. US 2 754 243 und DE-OS 2 209 554). Die Wirkung und die Wirkungsdauer dieser bekannten Verbindungen sind jedoch, insbesondere bei niedrigen Aufwandmengen bzw. Wirkstoffkonzentrationen nicht immer voll zufriedenstellend.

Es wurden nun neue Pyrimidinyl(thiono)(thiol)-phosphor(phosphon)säure(amid)ester der allgemeinen Formel (I)

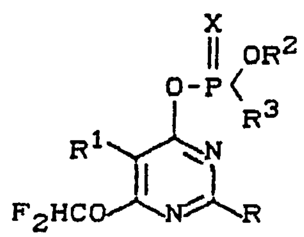

(I)

gefunden,
in welcher
R für Wasserstoff, oder für einen gegebenenfalls substituierten Rest der Reihe Alkyl, Alkoxy, Alkylthio, Dialkylamino, Cycloalkyl und Aryl steht,
$R^1$ für Wasserstoff, Alkyl oder Halogen steht,
$R^2$ für Alkyl steht,
$R^3$ für Alkyl, Alkoxy, Alkylthio, Amino, Alkylamino, Dialkylamino oder Aryl steht und
X für Sauerstoff oder Schwefel steht.

Weiterhin wurde gefunden, daß man die neuen Pyrimidin(thiono)(thiol)-phosphor(phosphon)säure(amid)ester der allgemeinen Formel (I) erhält,
wenn man
a) 4-Difluormethoxy-6-hydroxy-pyrimidin-Derivate der Formel (II)

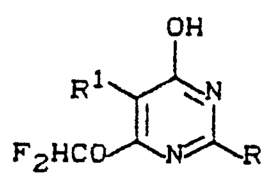

(II)

in welcher
$R^1$ und R die oben angegebene Bedeutung haben
oder das entsprechende Alkalimetall-, Erdalkalimetall- oder Ammoniumsalz mit Halogeniden der Formel (III)

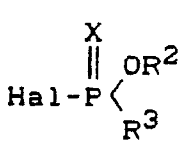

(III)

in welcher
$R^2$, $R^3$ und X die oben angegebene Bedeutung haben und
Hal für Halogen, vorzugsweise Chlor oder Brom, insbesondere Chlor steht,
gegebenenfalls in Gegenwart eines Säureakzeptors und gegebenenfalls in Gegenwart eines Verdünnungsmittels umsetzt, oder

b) wenn man

6-Hydroxy-pyrimidin-Derivate der Formel (IV)

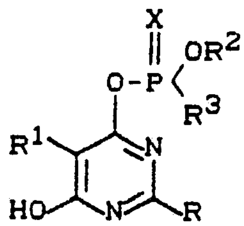

(IV)

in welcher

R, $R^1$, $R^2$, $R^3$ und X die oben angegebene Bedeutung haben

oder das entsprechende Alkalimetall-, Erdalkalimetall- oder Ammoniumsalz

mit Chlordifluormethan der Formel (V)

$Cl\text{-}CHF_2$ (V)

gegebenenfalls in Gegenwart eines Säureakzeptors und gegebenenfalls in Gegenwart eines Verdünnungsmittels umsetzt.

Die neuen Pyrimidinyl(thiono)(thiol)-phosphor(phosphon)säure(amid)ester der Formel (I) zeichnen sich in überragender Weise durch eine besonders hohe Wirksamkeit als Schädlingsbekämpfungsmittel, insbesondere als Insektizide, Akarizide und Nematizide aus.

Die erfindungsgemäßen Stoffe stellen somit eine wertvolle Bereicherung der Technik dar.

Bevorzugte Substituenten bzw. Bereiche der in den oben und nachstehend erwähnten Formeln aufgeführten Reste werden im folgenden erläutert:

In den allgemeinen Formeln bedeutet Alkyl geradkettiges oder verzweigtes Alkyl mit vorzugsweise 1 bis 6 Kohlenstoffatomen, bevorzugt mit 1 bis 4 Kohlenstoffatomen; beispielhaft seien genannt Methyl, Ethyl, n- und i-Propyl, n-, i-, s- und t-Butyl, Pentyl, Hexyl.

Unter dem Begriff Alkoxy in der Definition von R und $R^3$ in den allgemeinen Formeln ist geradkettiges oder verzweigtes Alkoxy mit vorzugsweise 1 bis 6, insbesondere 1 bis 4 Kohlenstoffatomen zu verstehen. Beispielhaft seien unsubstituiertes oder substituiertes Methoxy, Ethoxy, Propoxy, Butoxy sowie ihre Isomeren, wie z. B. i-Propoxy, i-, s-und t-Butoxy genannt.

Unter dem Begriff Alkylthio in der Definition von R und $R^3$ in den allgemeinen Formeln ist geradkettiges oder verzweigtes Alkylthio mit vorzugsweise 1 bis 4 Kohlenstoffatomen zu verstehen. Besonders bevorzugt sind Methylthio, Ethylthio, n-, i-Propylthio und n-, i-, s-und t-Butylthio.

Alkyl in den Alkylamino- und Dialkylaminogruppen R und $R^3$ ist geradkettig oder verzweigt und enthält jeweils vorzugsweise 1 bis 4, insbesondere 1 bis 3 Kohlenstoffatome, wobei Methyl, Ethyl, n- und i-Propyl genannt seien. Beispielhaft seien Dimethylamino, Diethylamino, Di-n-propylamino und Di-i-Propylamino aufgeführt.

Cycloalkyl in der Definition von R steht für Cycloalkyl mit vorzugsweise 3 bis 6, insbesondere 3 oder 6 Kohlenstoffatomen.

Beispielhaft seien unsubstituiertes oder substituiertes Cyclopropyl, Cyclobutyl, Cyclopentyl, Cyclohexyl und Cycloheptyl genannt.

Unter dem Begriff Aryl in der Definition von R und $R^3$ in den allgemeinen Formeln ist Aryl mit vorzugsweise 6 bis 10 Kohlenstoffatomen im Arylteil zu verstehen. Beispielhaft seien unsubstituiertes oder substituiertes Phenyl oder Naphthyl, insbesondere Phenyl genannt.

Halogen, in der Definition von $R^1$ steht für Fluor, Chlor, Brom , insbesondere Chlor oder Brom.

Die gegebenenfalls substituierten Reste der allgemeinen Formeln können einen oder mehrere, vorzugsweise 1 bis 3, insbesondere 1 oder 2 gleiche oder verschiedene Substituenten tragen. Als Substituenten seien beispielhaft und vorzugsweise aufgeführt: Alkyl mit vorzugsweise 1 bis 4, insbesondere 1 oder 2 Kohlenstoffatomen, wie Methyl, Ethyl, n- und i-Propyl und n-, i- und t-Butyl; Alkoxy mit vorzugsweise 1 bis 4, insbesondere 1 oder 2 Kohlenstoffatomen, wie Methoxy, Ethoxy, n- und i-Propyloxy und n-, i- und t-Butyloxy; Alkylthio mit vorzugsweise 1 bis 4, insbesondere 1 oder 2 Kohlenstoffatomen, wie Methylthio, Ethylthio, n- und i-Propylthio und n-, i- und t-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Hydroxy; Halogen, vorzugsweise Fluor, Chlor, Brom und Iod,

insbesondere Fluor, Chlor und Brom; Alkylsulfonyl mit vorzugsweise 1 bis 4, insbesondere 1 oder 2 Kohlenstoffatomen, wie Methylsulfonyl und Ethylsulfonyl. Die gegebenenfalls substituierten Reste sind vorzugsweise unsubstituiert.

In den allgemeinen Formeln steht R vorzugsweise für $C_1$-$C_4$-Alkyl oder $C_1$-$C_4$-Alkylthio, insbesondere für i-$C_3H_7$ oder t-$C_4H_9$.

$R^1$ steht in den allgemeinen Formeln bevorzugt für Wasserstoff,

$R^2$ steht in den allgemeinen Formeln vorzugsweise für $C_1$-$C_4$-Alkyl, insbesondere für Methyl, Ethyl oder i-Propyl.

In den allgemeinen Formeln steht $R^3$ vorzugsweise für $C_1$-$C_4$-Alkyl, $C_1$-$C_4$-Alkoxy, $C_1$-$C_4$-Alkylthio und $C_1$-$C_4$-Alkylamino, insbesondere für Methyl, Ethyl, Methoxy, Ethoxy und i-Propylamino.

X steht in den allgemeinen Formeln vorzugsweise für Schwefel.

Von den erfindungsgemäßen Pyrimidinyl(thiono)(thiol)-phosphor(phosphon)säure(amid)estern der Formel (I) sind diejenigen bevorzugt,
in welchen
R für Wasserstoff, Alkyl mit 1 bis 4 Kohlenstoffatomen, durch Alkylsulfonyl mit 1 oder 2 Kohlenstoffatomen, substituiertes Alkyl mit 1 bis 4 Kohlenstoffatomen, Alkoxy mit 1 bis 4 Kohlenstoffatomen, Alkylthio mit 1 bis 4 Kohlenstoffatomen, Dialkylamino mit 1 bis 4 Kohlenstoffatomen in den einzelnen Alkylteilen, Cycloalkyl mit 3 bis 6 Kohlenstoffatomen oder Phenyl (vorzugsweise für $C_1$-$C_4$-Alkyl oder $C_1$-$C_4$-Alkylthio) steht,
$R^1$ für Wasserstoff, Alkyl mit 1 bis 4 Kohlenstoffatomen oder Halogen (vorzugsweise für Wasserstoff) steht,
$R^2$ für Alkyl mit 1 bis 4 Kohlenstoffatomen steht,
$R^3$ für Alkyl mit 1 bis 4 Kohlenstoffatomen, Alkoxy mit 1 bis 4 Kohlenstoffatomen, Alkylthio mit 1 bis 4 Kohlenstoffatomen, Amino, Alkylamino mit 1 bis 4 Kohlenstoffatomen, Dialkylamino mit 1 bis 4 Kohlenstoffatomen in den einzelnen Alkylteilen oder Phenyl (vorzugsweise für $C_1$-$C_4$-Alkyl, $C_1$-$C_4$-Alkoxy oder $C_1$-$C_4$-Alkylamino) steht und
X für Sauerstoff oder Schwefel (vorzugsweise Schwefel) steht.

Besonders bevorzugt sind diejenigen Pyrimidinyl(thiono)(thiol)-phosphor(phosphon)säure(amid)ester der Formel (I)
in welchen
R für Wasserstoff, Methyl, Ethyl, n-Propyl, i-Propyl, sec.-Butyl, t.-Butyl, Methylsulfonylmethyl, Methylsulfonylethyl, Methoxy, Ethoxy, i-Propoxy, Methylthio, Ethylthio, i-Propylthio, Dimethylamino, Diethylamino, Cyclopropyl, Cyclohexyl oder Phenyl (vorzugsweise für i-Propyl, t-Butyl oder Methylthio) steht,
$R^1$ für Wasserstoff, Methyl, Ethyl, Chlor oder Brom (vorzugsweise für Wasserstoff) steht,
$R^2$ für Methyl, Ethyl, n-Propyl, i-Propyl, n-Butyl, sec.-Butyl, i-Butyl, t-Butyl (vorzugsweise für Methyl, Ethyl oder i-Propyl) steht,
$R^3$ für Methyl, Ethyl, Methoxy, Ethoxy, i-Propoxy, Methylthio, Ethylthio, n-Propylthio, sec.-Butylthio, Amino, Ethylamino, n-Propylamino, i-Propylamino, sec.-Butylamino, Dimethylamino, Diethylamino oder Phenyl (vorzugsweise für Ethyl, Methoxy, Ethoxy oder i-Propylamino) steht und
X für Sauerstoff oder Schwefel (vorzugsweise für Schwefel) steht.

Die für die Verbindungen der Formel (I) angegebenen bevorzugten Definitionen gelten auch für die Ausgangsverbindungen der Formeln (II), (III) und (IV).

Im einzelnen seien außer den bei den Herstellungsbeispielen genannten Verbindungen die nachfolgend in Tabelle 1 aufgeführten Verbindungen der Formel (I)

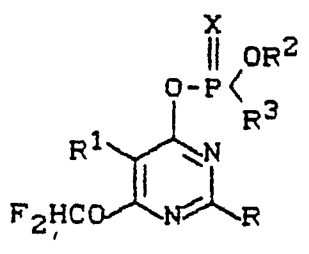

(I)

genannt:

Tabelle 1:

| R | $R^1$ | $R^2$ | $R^3$ | X |
|---|---|---|---|---|
| $C_3H_7$-iso | H | $C_2H_5$ | $OC_2H_5$ | S |
| $C_3H_7$-iso | H | $CH_3$ | $OCH_3$ | S |
| $CH_3$ | H | $CH_3$ | $OCH_3$ | S |
| $CH_3$ | H | $C_2H_5$ | $OC_2H_5$ | S |
| $OCH_3$ | H | $C_2H_5$ | $OC_2H_5$ | S |
| $N(CH_3)_2$ | H | $C_2H_5$ | $OC_2H_5$ | S |
| $OCH_3$ | H | $CH_3$ | $OCH_3$ | S |
| $OCH_3$ | H | $CH_3$ | $C_2H_5$ | S |
| $C_4H_9$-tert. | Cl | $C_2H_5$ | $OC_2H_5$ | S |
| $CH_3$ | $CH_3$ | $C_2H_5$ | $OC_2H_5$ | S |
| $C_3H_7$-iso | H | $C_2H_5$ | 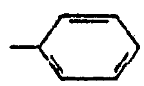 | S |
| 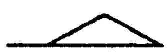 | H | $C_2H_5$ | $OC_2H_5$ | S |
| 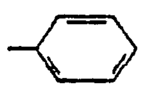 | H | $C_2H_5$ | $OC_2H_5$ | S |
| H | H | $C_2H_5$ | $OC_2H_5$ | S |
| $C_2H_5$ | H | $C_2H_5$ | $OC_2H_5$ | S |

Verwendet man beispielsweise für das erfindungsgemäße Verfahren (a) 2-Methylthio-4-difluormethoxy-6-hydroxypyrimidin und 0,0-Diethyl-thionophosphorsäurediesterchlorid als Ausgangsstoffe, so kann die entsprechende Reaktion durch das folgende Formelschema skizziert werden:

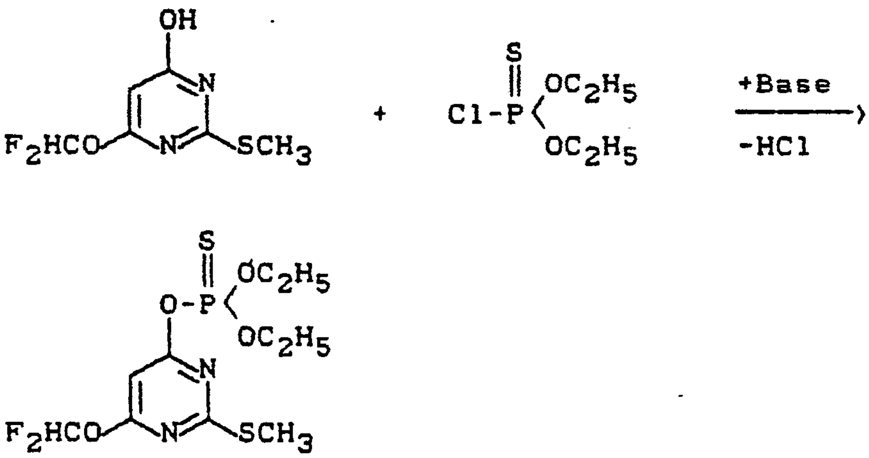


Verwendet man beispielsweise 0-(4-Hydroxy-2-tert-butyl-pyrimidin-6-yl)-0-methyl-thionoethanphosphonsäurediester und Chlordifluormethan als Ausgangsstoffe, so kann die entsprechende Reaktion durch das folgende Formelschema skizziert werden:

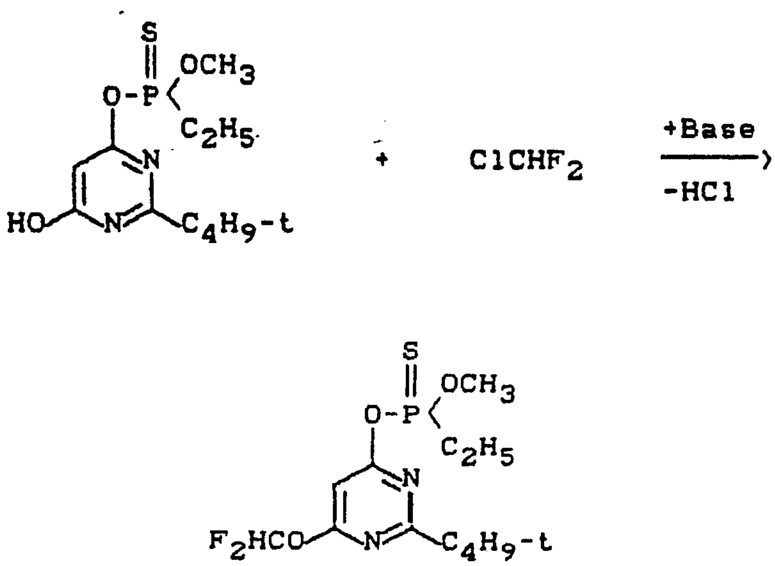


Die bei der erfindungsgemäßen Verfahrensvariante (a) als Ausgangsstoffe einzusetzenden 4-Difluormethoxy-6-hydroxy-pyrimidin-Derivate bzw. das entsprechende Alkalimetall-, Erdalkalimetall- oder Ammoniumsalz sind durch die Formel (II) allgemein definiert. In dieser Formel (II) stehen $R^1$ und R vorzugsweise für diejenige Bedeutung, die schon bei der Beschreibung der erfindungsgemäßen Stoffe der Formel (I) für diese Substituenten als bevorzugt genannt wurde.

Die Verbindungen der Formel (II) sind teilweise bekannt (vgl. z.B. US 4692524) und/oder lassen sich nach bekannten Verfahren in analoger Weise erhalten, indem man beispielsweise 4,6-Dihydroxypyrimidine der Formel (VI)

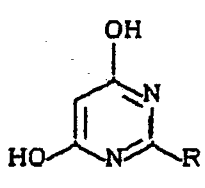

(VI)

in welcher
R die oben angegebene Bedeutung hat,

mit Chlordifluormethan der Formel (V)

$Cl\text{-}CHF_2$ (V)

gegebenenfalls in Gegenwart eines Verdünnungsmittels, wie beispielsweise Dioxan und gegebenenfalls in Gegenwart einer Base, wie beispielsweise Natriumhydroxid, bei Temperaturen zwischen 20 °C und 100 °C umsetzt.

Im einzelnen seien außer den bei den Herstellungsbeispielen genannten Verbindungen die nachfolgend in Tabelle 2 aufgeführten Verbindungen der Formel (II)

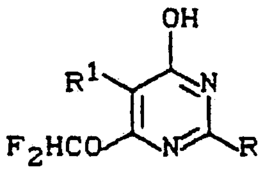

(II)

genannt:

Tabelle 2:

| R | $R^1$ |
|---|---|
| $C_3H_7$-iso | H |
| $C_2H_5$ | H |
| $CH_3$ | H |
| H | H |
| $OCH_3$ | H |
| $N(CH_3)_2$ | H |
| $C_3H_7$-iso | Cl |
| $C_3H_7$-iso | $CH_3$ |
| 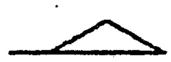 | H |
| 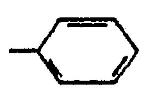 | H |

Die außerdem für die Durchführung der erfindungsgemäßen Verfahrensvariante (a) als Ausgangsstoffe einzusetzenden Halogenide sind durch die Formel (III) definiert. In dieser Formel stehen $R^2$, $R^3$ und X für diejenigen Reste, welche bei der Definition in Formel (I) angegeben sind. Hal steht in dieser Formel für Halogen, insbesondere Chlor oder Brom.

Die Verbindungen der Formel (III) sind bekannt und/oder können nach allgemein bekannten Verfahren und Methoden hergestellt werden (vgl. z. B. Methoden der organischen Chemie (Houben-Weyl-Müller), 4. Aufl., Band 12/1 (1963), S. 415-420 und S. 560-563, Band 12/2 (1964), S. 274-292, S. 405-408 und S. 607-618, S. 621-622 und S. 755-757; Thieme-Verlag Stuttgart).

Als Verbindungen der Formel (II) seien beispielhaft genannt:

Methoxy-methyl-, Methoxy-ethyl-, Methoxy-n-propyl-, Methoxy-i-propyl, Methoxy-n-butyl-, Methoxy-i-butyl-, Methoxy-sec.-butyl-, Ethoxy-methyl-, Ethoxy-ethyl-, Ethoxy-n-propyl-, Ethoxy-i-propyl-, Ethoxy-n-butyl-, Ethoxy-i-butyl-, Ethoxy-sec-butyl-, n-Propoxy-methyl-, n-Propoxy-ethyl-, n-Propoxy-n-propyl-, n-Propoxy-i-propyl, n-Propoxy-n-butyl-, n-Propoxy-i-butyl-, i-Propoxy-methyl-, i-Propoxy-ethyl-, i-Propoxy-n-propyl-, i-Propoxy-i-propyl-, i-Propoxy-n-butyl-, i-Propoxy-i-butyl-, n-Butoxy-methyl-, n-Butoxy-ethyl-, n-Butoxy-n-propyl-, n-Butoxy-i-propyl-, n-Butoxy-n-butyl-, n-Butoxy-i-butyl-, i-Butoxy-methyl-, i-Butoxy-ethyl-, i-Butoxy-n-propyl, i-Butoxy-i-propyl, i-Butoxy-n-butyl-, i-Butoxy-i-butyl-, sec-Butoxy-methyl-, sec-Butoxy-ethyl, sec-Butoxy-n-propyl-, sec-Butoxy-i-propyl-, sec-Butoxy-n-butyl-, sec-Butoxy-i-butyl-, tert-Butoxy-methyl-, tert-Butoxy-ethyl, tert-Butoxy-n-propyl-, tert-Butoxy-i-propyl-, tert-Butoxy-n-butyl-, tert-Butoxy-i-butyl-(thiono)-phosphonsäureester-chlorid bzw. -bromid;
Dimethoxy-, Diethoxy-, Di-n-propoxy-, Di-i-propoxy, Di-n-butoxy-, Di-i-butoxy-, Methoxy-ethoxy-, Methoxy-n-propoxy, Methoxy-i-propoxy-, Methoxy-n-butoxy-, Methoxy-i-butoxy-, Methoxy-sec-butoxy-, Methoxy-tert-butoxy-, Ethoxy-n-propoxy, Ethoxy-i-propoxy-, Ethoxy-n-butoxy-, Ethoxy-i-butoxy-, Ethoxy-sec-butoxy-, Ethoxy-tert-butoxy-, n-Propoxy-i-propoxy-, n-Propoxy-n-butoxy-, n-Propoxy-i-butoxy-, n-Propoxy-sec-butoxy-, n-Propoxy-tert-butoxy-, i-Propoxy-n-butoxy-, i-Propoxy-i-butoxy, n-Butoxy-i-butoxy-, n-Butoxy-sec-butoxy-, n-Butoxy-tert-butoxy-(thiono)phosphorsäureester-chlorid bzw. -bromid;
Methoxy-methylthio-, Methoxy-ethylthio-, Methoxy-n-propylthio-, Methoxy-i-propylthio-, Methoxy-n-butylthio-, Methoxy-i-butylthio-, Methoxy-sec-butylthio-, Ethoxymethylthio-, Ethoxy-ethylthio-, Ethoxy-n-propylthio-, Ethoxy-i-propylthio-, Ethoxy-n-butylthio-, Ethoxy-i-butylthio-, Ethoxy-sec-butylthio-, n-Propoxy-methylthio-, n-Propoxy-ethylthio-, n-Propoxy-n-propylthio-, n-Propoxy-i-propylthio-, n-Propoxy-n-butylthio, n-Propoxy-i-butylthio-, i-Propoxy-methylthio-, i-Propoxy-ethylthio-, i-Propoxy-n-propylthio-, i-Propoxy-i-propylthio-, i-Propoxy-n-butylthio-, i-Propoxy-i-butylthio-, n-Butoxy-methylthio-, n-Butoxy-ethylthio-, n-Butoxy-n-propylthio-, n-Butoxy-i-propylthio-, n-Butoxy-n-butylthio-, n-Butoxy-i-butylthio-, i-Butoxy-methylthio-, i-Butoxy-ethylthio-, i-Butoxy-n-propylthio-, i-Butoxy-i-propylthio-, i-Butoxy-n-butylthio-, i-Butoxy-i-butylthio-(thiono)-phosphorsäureester-chlorid bzw. -bromid;
Methoxy-(di)methylamino-, Methoxy-(di)ethylamino-, Methoxy-(di)n-propylamino-, Methoxy-(di)i-propylamino-, Methoxy-(di)n-butylamino-, Methoxy-(di)i-butylamino-, Ethoxy-(di)methylamino-, Ethoxy-(di)n-propylamino-, Ethoxy-(di)i-propylamino-, Ethoxy-(di)n-butylamino-, Ethoxy-(di)i-butylamino-, n-Propoxy-(di)-methylamino-, n-Propoxy-(di)ethylamino-, n-Propoxy-(di)n-propylamino-, n-Propoxy-(di)i-propylamino-, n-Propoxy-(di)n-butylamino-, n-Propoxy-(di)i-butylamino-, i-Propoxy-(di)methylamino-, i-Propoxy-(di)-ethylamino-, i-Propoxy-(di)n-propylamino-, i-Propoxy-(di)i-propylamino-, i-Propoxy-(di)n-butylamino-, i-Propoxy-(di)i-butylamino-, n-Butoxy-(di)methylamino-, n-Butoxy-(di)ethylamino-, n-Butoxy-(di)n-propylamino-, n-Butoxy-(di)i-Propylamino-, n-Butoxy-(di)n-butylamino-, n-Butoxy-(di)i-butylamino-, i-Butoxy-(di)-methylamino-, i-Butoxy-(di)ethylamino-, i-Butoxy-(di)n-propylamino-, i-Butoxy-(di)i-propylamino-, i-Butoxy-(di)n-butylamino-, i-Butoxy-(di)i-butylamino-, sec-Butoxy-(di)methylamino-, sec-Butoxy-(di)ethylamino-, sec-Butoxy-(di)n-propylamino-, sec-Butoxy-(di)i-propylamino-, sec-Butoxy-(di)i-butylamino-, tert-Butoxy-(di)-methylamino-, tert-Butoxy-(di)ethylamino-, tert-Butoxy-(di)n-propylamino-, tert-Butoxy-(di)n-butylamino-(thiono)phosphorsäureester-chlorid bzw. -bromid;
Methoxy-, Ethoxy-, n-Propoxy-, i-Propoxy-, n-Butoxy-, i-Butoxy-, sec-Butoxy- und tert-Butoxy-phenyl(thiono)-phosphonsäure-chlorid bzw. bromid.

Die zur Durchführung der erfindungsgemäßen Verfahrensvariante (b) als Ausgangsstoffe einzusetzenden 6-Hydroxy-pyrimidin-Derivate bzw. das entsprechende Alkalimetall-, Erdalkalimetall- oder Ammoniumsalz sind durch die Formel (IV) allgemein definiert. In dieser Formel (IV) stehen R, $R^1$, $R^2$, $R^3$ und X für diejenige Bedeutung, die schon bei der Beschreibung der erfindungsgemäßen Stoffe der Formel (I) für diese Substituenten als bevorzugt genannt wurde.

Die Verbindungen der Formel (IV) sind bekannt (vgl. z.B. DE-OS 3704689 und DE-OS 2630054) und/oder lassen sich nach bekannten Verfahren in analoger Weise erhalten, indem man beispielsweise 4,6-Dihydroxypyrimidine der Formel (VI)

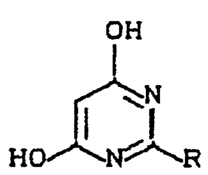

(VI)

in welcher
R die oben angegebene Bedeutung hat,
mit Halogeniden der Formel (III)

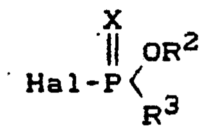

(III)

in welcher

$R^2$, $R^3$ und X die oben angegebene Bedeutung haben und

Hal für Halogen, vorzugsweise Chlor oder Brom, insbesondere Chlor steht,

gegebenenfalls in Gegenwart eines Verdünnungsmittels, wie beispielsweise Methylenchlorid und gegebenenfalls in Gegenwart einer Base, wie beispielsweise Triethylamin bei Temperaturen zwischen 0 °C und 50 °C umsetzt.

Das außerdem für die Durchführung der erfindungsgemäßen Verfahrensvariante (b) als Ausgangsstoff zu verwendende Chlordifluormethan der Formel (V) ist eine allgemein bekannte Verbindung der organischen Chemie.

Die Verfahrensvariante (a) zur Herstellung der Verbindungen der allgemeinen Formel (I) wird bevorzugt unter Mitverwendung geeigneter Lösungs- und Verdünnungsmittel durchgeführt. Als solche kommen praktisch alle inerten organischen Solventien in Frage. Hierzu gehören insbe sondere aliphatische und aromatische, gegebenenfalls chlorierte Kohlenwasserstoffe, wie Benzol, Toluol, Xylol, Benzin, Methylenchlorid, Chloroform, Tetrachlorkohlenstoff, Chlorbenzol oder Ether, wie Diethyl- und Dibutylether, Tetrahydrofuran, Dioxan, ferner Ketone, beispielsweise Aceton, Methylethyl-, Methylisopropyl-und Methylisobutylketon, außerdem Nitrile, wie Aceto-und Propionitril.

Als Säureakzeptoren können alle üblichen Säurebindemittel Verwendung finden. Besonders bewährt haben sich Alkalicarbonate und -alkoholate, wie Natrium- und Kaliumcarbonat, Kalium-tert-butylat, ferner aliphatische, aromatische oder heterocyclische Amine, beispielsweise Triethylamin, Trimethylamin, Dimethylanilin, Dimethylbenzylamin und Pyridin.

Die Reaktionstemperatur kann innerhalb eines größeren Bereiches variiert werden. Im allgemeinen arbeitet man zwischen 0 °C und 100 °C, vorzugsweise bei 20 °C bis 60 °C.

Die Umsetzung läßt man im allgemeinen bei Normaldruck ablaufen.

Zur Durchführung der Verfahrensvariante (a) setzt man die Ausgangsmaterialien meist in äquivalentem Verhältnis ein. Ein Überschuß der einen oder anderen Komponente bringt keine wesentlichen Vorteile. Die Reaktionspartner werden meist in einem der oben angeführten Lösungsmittel in Gegenwart eines Säurebindemittels vereinigt und bei erhöhter Temperatur zur Vervollständigung der Reaktion eine oder mehrere Stunden gerührt. Danach versetzt man die Mischung mit einem organischen Lösungsmittel, z.B. Toluol und arbeitet die organische Phase in üblicher Weise durch Waschen, Trocknen und Abdestillieren des Lösungsmittels auf.

Die Verfahrensvariante (b) zur Herstellung der Verbindungen der allgemeinen Formel (I) wird ebenfalls bevorzugt unter Mitverwendung geeigneter Lösungs- und Verdünnungsmittel durchgeführt. Als solche kommen praktisch alle inerten organischen Solventien in Frage. Hierzu gehören insbesondere aliphatische und aromatische, gegebenenfalls chlorierte Kohlenwasserstoffe, wie Benzol, Toluol, Xylol, Benzin, Methylenchlorid, Chloroform, Tetrachlorkohlenstoff, Chlorbenzol oder Ether, wie Diethyl- und Dibutylether, Tetrahydrofuran, Dioxan, ferner Ketone, beispielsweise Aceton, Methylethyl-, Methylisopropyl- und Methylisobutylketon, außerdem Nitrile, wie Aceto- und Propionitril.

Als Säureakzeptoren können alle üblichen Säurebindemittel Verwendung finden. Besonders bewährt haben sich Alkalihydroxide, Alkalicarbonate und -alkoholate, wie Natrium- und Kaliumhydroxid, Natrium- und Kaliumcarbonat, Kalium-tert-butylat, ferner aliphatische, aromatische oder heterocyclische Amine, beispielsweise Triethylamin, Trimethylamin, Dimethylanilin, Dimethylbenzylamin und Pyridin.

Die Reaktionstemperatur kann innerhalb eines größeren Bereiches variiert werden. Im allgemeinen arbeitet man zwischen -20 °C und +60 °C, vorzugsweise bei -10 °C bis +40 °C.

Die Umsetzung läßt man im allgemeinen bei Normaldruck ablaufen. Es ist aber auch möglich, unter Druck zu arbeiten (vorzugsweise 1-10 bar).

Zur Durchführung der Verfahrensvariante (b) setzt man die Ausgangsmaterialien vorzugsweise in äquivalentem Verhältnis ein. Es ist aber auch möglich, das als Reaktionspartner verwendete Chlordifluormethan im Überschuß einzusetzen. Die Reaktionspartner werden meist in einem der oben angeführten Lösungsmittel in Gegenwart eines Säurebindemittels vereinigt und zur Vervollständigung der Reaktion eine oder mehrere Stunden gerührt. Danach wird das Reaktionsgemisch filtriert und das Lösungsmittel unter vermindertem Druck abdestilliert.

Die Verbindungen der allgemeinen Formel (I) fallen meist in Form von Ölen an, die sich häufig nicht

unzersetzt destillieren lassen, jedoch durch sogenanntes "Andestillieren", d.h. durch längeres Erhitzen unter vermindertem Druck auf mäßig erhöhte Temperatur von den letzten flüchtigen Anteilen befreit und auf diese Weise gereinigt werden. Zu ihrer Charakterisierung dient der Brechungsindex.

Die Wirkstoffe eignen sich zur Bekämpfung von tierischen Schädlingen, vorzugsweise Arthropoden und Nematoden, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa,

Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Die erfindungsgemäßen Wirkstoffe der Formel (I) zeichnen sich insbesondere durch eine hervorragende insektizide und nematizide Wirksamkeit aus. Sie zeigen insbesondere beim Einsatz als Blattinsektizide und Bodeninsektizide eine hervorragende Wirkung, insbesonder gegen Larven, wie z.B. Diabrotica balteata-Larven, gegen Blattläuse, wie Aphis-fabae, gegen Nematoden, wie Globodera rostochiensis und gegen Raupen, wie Spodoptera frugiperda. Sie eignen sich in besonderem Maße auch für die Saatgutbehandlung.

Darüber hinaus zeigen einige der erfindungsgemäßen Stoffe auch eine fungizide Wirkung gegen Pyricularia oryzae und Pellicularia sasakii an Reis.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in

weiten Bereichen variieren. Die Wirkstoffkonzentration der Anwen dungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weisen.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Herstellung und die Verwendung der erfindungsgemäßen Wirkstoffe wird durch die folgenden Beispiele erläutert.

Im vorliegenden Text beziehen sich alle Prozentangaben auf Gewichtsprozente, wo nicht anderes angegeben wird.

Herstellungsbeispiele:

Beispiel 1:

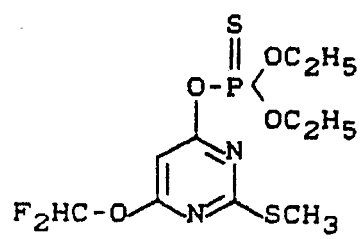

(Verfahrensvariante (a))

Ein Gemisch aus 80 ml Acetonitril, 20,8 g(0,1 Mol) 2-Methylthio-4-difluormethoxy-6-hydroxy-pyrimidin, 20,7 g (0,15 Mol) Kaliumcarbonat und 38,8 g (0,1 Mol) 0,0-Diethyl-thionophosphorsäurediesterchlorid wird 2 Stunden bei 55° C gerührt. Dann gießt man das Reaktionsgemisch in 400 ml Toluol und wäscht es zweimal mit je 300 ml Wasser. Die Toluollösung wird über Natriumsulfat getrocknet und unter vermindertem Druck eingedampft. Den Rückstand destilliert man im Hochvakuum an.

Man erhält so 29 g (81% der Theorie) 0,0-Diethyl-0-(2-methylthio-4-difluormethoxy-pyrimidin-6-yl)-thionophosphorsäureester in Form farbloser Kristalle mit dem Schmelzpunkt 39° C.

Beispiel 2:

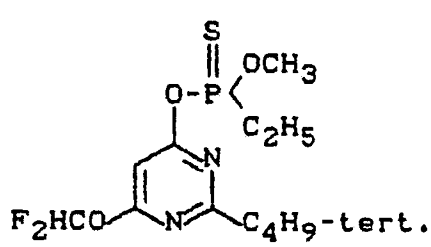

(Verfahrensvariante (b))

Zu einer Lösung von 6,7 g (0,06 Mol) Kalium-tert-butylat in 100 ml trockenem Tetrahydrofuran gibt man unter Eiskühlung 14,5 g (0,05 Mol) 0-(4-Hydroxy-2-tert-butyl-pyrimidin-6-yl)-0-methyl-thionoetha nphosphonsäure-diester. Bei -5 bis 0° C leitet man in dieses Gemisch 2 Stunden Chlordifluormethan ein

und rührt dann 18 Stunden bei Raumtemperatur. Dann wird das Lösungsmittel unter vermindertem Druck abgezogen; den Rückstand löst man in 500 ml n-Hexan, gibt 15 g Kieselgel zu und filtriert. Das Filtrat wird unter vermindertem Druck eingedampft; den Rückstand destilliert man bei 30 °C im Hochvakuum an.

Man erhält so 6,9 g (41% der Theorie) 0-(4-Difluormethoxy-2-tert-butyl-pyrimidin-6-yl )-0-methylthiono-ethanphosphonsäurediester in Form eines farblosen Öles mit dem Brechungsindex $n_D^{24}$ : 1,4853.

In analoger Weise zu Beispiel 1 und 2 und unter Berücksichtigung der Angaben in der Beschreibung zu den erfindungsgemäßen Verfahren, werden die nachfolgend in Tabelle 3 aufgeführten Endprodukte der Formel (I)

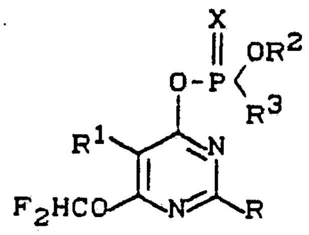

(I)

erhalten.

Tabelle 3

| Bsp. Nr. | R | $R^1$ | $R^2$ | $R^3$ | X | Brechnungsindex |
|---|---|---|---|---|---|---|
| 3 | $C_4H_9$-tert | H | $C_2H_5$ | $OC_2H_5$ | S | $n_D^{24}$ : 1,4780 |
| 4 | $C_4H_9$-tert | H | $CH_3$ | $OCH_3$ | S | $n_D^{22}$ : 1,4834 |
| 5 | $C_4H_9$-tert | H | $C_2H_5$ | $NHC_3H_7$-iso | S | $n_D^{23}$ : 1,4872 |
| 6 | $C_4H_9$-tert | H | $C_3H_7$-iso | $OC_2H_5$ | S | $n_D^{22}$ : 1,4751 |
| 7 | $C_4H_9$-tert | H | $C_2H_5$ | $SC_4H_9$-sec | O | $n_D^{22}$ : 1,4835 |
| 8 | $C_3H_7$-iso | H | $C_2H_5$ | $OC_2H_5$ | S | $n_D^{22}$ : 1,4835 |
| 9 | $C_3H_7$-iso | H | $CH_3$ | $OCH_3$ | S | $n_D^{23}$ : 1,4890 |

## Herstellung der Ausgangsprodukte

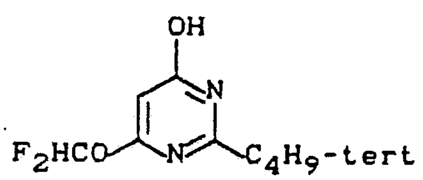

(II-1)

In eine Mischung aus 84 g (0,5 Mol) 2-tert-Butyl-4,6-dihydroxypyrimidin, 100 ml Dioxan, 90 ml Wasser und 80 g (2 Mol) Natriumhydroxid leitet man bei 80 °C Chlordifluormethan ein, bis alles Vorprodukt umgesetzt ist. Nach Zugabe von 1 l Wasser wird unter Kühlen mit konz. Salzsäure auf pH 6 eingestellt und das ausgefallene Produkt abgesaugt.

Man erhält auf diese Weise 63,7 g (29% der Theorie) 2-tert-Butyl-4-difluormethoxy-6-hydroxypyrimidin in Form farbloser Kristalle mit dem Schmelzpunkt 156 °C.

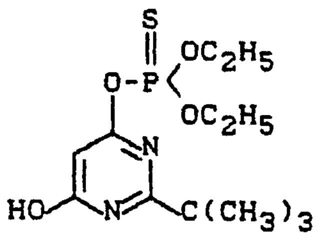

(IV-1)

Ein Gemisch aus 21,1 g (0,125 Mol) 4,6-Dihydroxy-2-tert-butyl-pyrimidin, 13,3 g (0,131 Mol) Triethylamin und 120 ml Methylenchlorid wird 30 Minuten bei 20 °C gerührt, dann auf 5 °C abgekühlt und tropfenweise mit 19,7 g (0,105 Mol) 0,0-Diethyl-thionophosphorsäure-diesterchlorid versetzt. Das Reaktionsgemisch wird 20 Stunden bei 20 °C gerührt, zweimal mit je 50 ml Wasser gewaschen und im Wasserstrahlvakuum eingedampft.

Man erhält so 19,9 g (60% der Theorie) 0,0-Diethyl-0-(4-hydroxy-2-tert-butyl-pyrimidin-6-yl)-thionophosphorsäureester als kristallinen Rückstand vom Schmelzpunkt 98 °C.

In analoger Weise zu Beispiel (IV-1) und unter Berücksichtigung der Angaben in der Beschreibung zu den erfindungsgemäßen Verfahren, werden die nachfolgend in Tabelle 4 aufgeführten Zwischenprodukte der Formel (IV)

(IV))

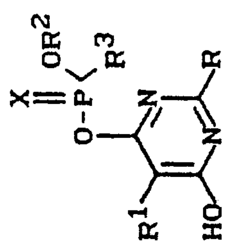

erhalten:

Tabelle 4:

| Bsp. Nr. | R | $R^1$ | $R^2$ | $R^3$ | X | Brechungsindex |
|---|---|---|---|---|---|---|
| (IV-2) | $C_4H_9$-tert | H | $C_2H_5$ | $-S-CH-C_2H_5$<br>$\quad\;\;|$<br>$\quad CH_3$ | O | $n_D^{22}$ : 1,5275 |
| (IV-3) | $C_4H_9$-tert | H | $C_2H_5$ | $-NH-C_3H_7$-iso | S | $n_D^{22}$ : 1,5332 |

Anwendungsbeispiele:

In einigen der folgenden Anwendungsbeispiele werden die nachstehend aufgeführten Verbindungen als Vergleichssubstanzen eingesetzt:

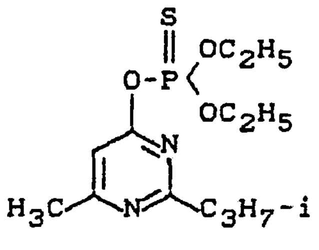

(A)

0,0-Diethyl-0-(6-methyl-2-i-propyl-pyrimidin-4-yl)-thiono-phosphorsäureester (bekannt aus US 2 754 243)

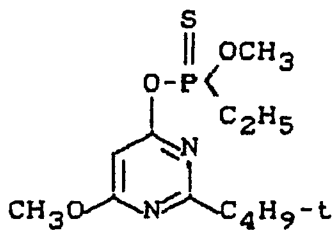

(B)

0-(6-Methoxy-2-t.-butyl-pyrimidin-4-yl)-0-methyl-thiono-ethanphosphonsäurediester (bekannt aus DE-OS 2 209 554).

Beispiel A

Grenzkonzentrationstest / Bodeninsekten

Testinsekt: Diabrotica balteata - Larven im Boden
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration. Die Wirkstoffzubereitung wird innig mit dem Boden vermischt. Dabei spielt die Konzentration des Wirkstoffes in der Zubereitung praktisch keine Rolle, entsprechend ist allein die Wirkstoffgewichtsmenge pro Volumeneinheit Boden, welche in ppm (mg/l) angegeben wird. Man füllt den Boden in 0,5 l Töpfe und läßt diese bei 20 ° C stehen.

Sofort nach dem Ansatz werden je Topf 6 vorgekeimte Maiskörner gelegt. Nach 2 Tagen werden in den behandelten Boden die entsprechenden Testinsekten gesetzt. Nach weiteren 7 Tagen wird der Wirkungsgrad des Wirkstoffes durch Auszählen der toten und lebenden Testinsekten in % bestimmt. Der Wirkungsgrad ist 100%, wenn alle Testinsekten abgetötet worden sind, er ist 0%, wenn noch genau so viele Testinsekten leben wie in der unbehandelten Kontrolle.

In diesem Test zeigten die Verbindungen der Beispiele (1) und (2) bei einer beispielhaften Konzentration von 0,3 ppm einen Abtötungsgrad von 95%, während bei der gleichen Konzentration die Vergleichsverbindung (B) keine Abtötung (0%) ergab.

Beispiel B

Saatgutbehandlungs-Test / Bodeninsekten

Testinsekt: Diabrotica balteata - Larven im Boden
Testpflanze: Zea mays
Lösungsmittel: 1 Gewichtsteil Aceton
Trägermaterial: Kaolin

Zur Herstellung einer zweckmäßigen Wirkstoffzubereitung löst man den Wirkstoff in Aceton und vermischt 1 Gewichtsteil Wirkstoff/Aceton mit 5 Gewichtsteilen Kaolin. Das Mais-Saatgut wird mit dieser Wirkstoffzubereitung mit den geforderten Aufwandmengen behandelt. Die Mais-Aussaat erfolgt in 0,5 l Töpfen mit standardisiertem Boden bei 20 °C Raumtemperatur.

Nach 1 Tag werden ca. 30 Diabrotica-Larven in jeden Topf gegeben. Nach weiteren 7 Tagen wird der Wirkungsgrad des Wirkstoffes durch Auszählen der toten und lebenden Testinsekten in % bestimmt. Der Wirkungsgrad ist 100%, wenn alle Testinsekten abgetötet worden sind, er ist 0%, wenn noch genau so viele Testinsekten leben wie in der unbehandelten Kontrolle.

In diesem Test zeigten die Verbindungen der Beispiele (2) und (5) bei einer beispielhaften Konzentration von 1 g/kg einen Abtötungsgrad von 100%, während bei der gleichen Konzentration die Vergleichsverbindung (A) keine Abtötung (0%) ergab.

## Beispiel C

Grenzkonzentrations-Test

Testnematode: Globodera rostochiensis
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffes in der Zubereitung praktisch keine Rolle, entscheidend ist allein die Wirkstoffmenge pro Volumeneinheit Boden, welche in ppm angegeben wird. Man füllt den behandelten Boden in Töpfe, pflanzt Kartoffeln ein und hält die Töpfe bei einer Gewächshaus-Temperatur von 18 °C.

Nach sechs Wochen werden die Kartoffelwurzeln auf Zysten untersucht und der Wirkungsgrad des Wirkstoffs in % bestimmt. Der Wirkungsgrad ist 100%, wenn der Befall vollständig vermieden wird, er ist 0%, wenn der Befall genau so hoch ist wie bei den Kontrollpflanzen in unbehandeltem, aber in gleicher Weise verseuchtem Boden.

In diesem Test zeigte die Verbindung des Beispiels (3) bei einer beispielhaften Konzentration von 2,5 ppm einen Abtötungsgrad von 95%, während bei der gleichen Konzentration die Vergleichsverbindung (B) keine Abtötung (0%) ergab.

## Beispiel D

Aphis-Test (systemische Wirkung)

Lösungsmittel: 7 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Mit je 20 ml Wirkstoffzubereitung der gewünschten Konzentration werden Bohnenpflanzen (Vicia faba), die stark von der schwarzen Bohnenlaus (Aphis fabae) befallen sind, angegossen, so daß die Wirkstoffzubereitung in den Boden eindringt, ohne den Sproß zu benetzen. Der Wirkstoff wird von den Wurzeln aufgenommen und in den Sproß weitergeleitet.

Nach der gewünschten Zeit wird die Abtötung in % bestimmt. Dabei bedeutet 100%, daß alle Blattläuse abgetötet wurden; 0% bedeutet, daß keine Blattläuse abgetötet wurden.

In diesem Test zeigten die Verbindungen der Beispiele (3) und (4) bei einer beispielhaften Konzentration von 0,1% nach 4 Tagen einen Abtötungsgrad von 100%, während bei der gleichen Konzentration die Vergleichsverbindung (B) keine Abtötung (0%) ergab.

Beispiel E

Spodoptera-Test

Lösungsmittel: 7 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen des Eulenfalters Spodoptera frugiperda besetzt, solange die Blätter noch feucht sind.

Nach der gewünschten Zeit wird die Abtötung in % bestimmt. Dabei bedeutet 100%, daß alle Raupen abgetötet wurden; 0% bedeutet, daß keine Raupen abgetötet wurden.

In diesem Test zeigte die Verbindung des Beispiels (4) bei einer beispielhaften Konzentration von 0,001% nach 3 Tagen einen Abtötungsgrad von 100%, während bei der gleichen Konzentration die Vergleichsverbindung (A) keine Abtötung (0%) ergab.

**Ansprüche**

1. Pyrimidin(thiono)(thiol)-phosphor(phosphon)säure(amid)ester

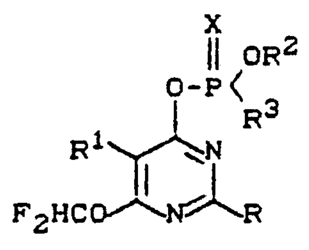

(I)

in welcher
R für Wasserstoff, oder für einen gegebenenfalls substituierten Rest der Reihe Alkyl, Alkoxy, Alkylthio, Dialkylamino, Cycloalkyl und Aryl steht,
$R^1$ für Wasserstoff, Alkyl oder Halogen steht,
$R^2$ für Alkyl steht,
$R^3$ für Alkyl, Alkoxy, Alkylthio, Amino, Alkylamino, Dialkylamino oder Aryl steht und
X für Sauerstoff oder Schwefel steht.

2. Pyrimidinyl(thiono)(thiol)-phosphor(phosphon)säure(amid)ester der allgemeinen Formel (I) gemäß Anspruch 1,
in welcher
R für Wasserstoff, Alkyl mit 1 bis 4 Kohlenstoffatomen, durch Alkylsulfonyl mit 1 oder 2 Kohlenstoffatomen, substituiertes Alkyl mit 1 bis 4 Kohlenstoffatomen, Alkoxy mit 1 bis 4 Kohlenstoffatomen, Alkylthio mit 1 bis 4 Kohlenstoffatomen, Dialkylamino mit 1 bis 4 Kohlenstoffatomen in den einzelnen Alkylteilen, Cycloalkyl mit 3 bis 6 Kohlenstoffatomen oder Phenyl steht,
$R^1$ für Wasserstoff, Alkyl mit 1 bis 4 Kohlenstoffatomen oder Halogen steht,
$R^2$ für Alkyl mit 1 bis 4 Kohlenstoffatomen steht,
$R^3$ für Alkyl mit 1 bis 4 Kohlenstoffatomen, Alkoxy mit 1 bis 4 Kohlenstoffatomen, Alkylthio mit 1 bis 4 Kohlenstoffatomen, Amino, Alkylamino mit 1 bis 4 Kohlenstoffatomen, Dialkylamino mit 1 bis 4 Kohlenstoffatomen in den einzelnen Alkylteilen oder Phenyl steht und
X für Sauerstoff oder Schwefel steht.

3. Pyrimidin(thiono)(thiol)-phosphor(phosphon)säure(amid)ester der allgemeinen Formel (I) gemäß Anspruch 1,
in welcher
R für Wasserstoff, Methyl, Ethyl, n-Propyl, i-Propyl, sec.-Butyl, t.-Butyl, Methylsulfonylmethyl, Methylsulfonylethyl, Methoxy, Ethoxy, i-Propoxy, Methylthio, Ethylthio, i-Propylthio, Dimethylamino, Diethylamino, Cyclopropyl, Cyclohexyl oder Phenyl steht,
$R^1$ für Wasserstoff, Methyl, Ethyl, Chlor oder Brom steht,
$R^2$ für Methyl, Ethyl, n-Propyl, i-Propyl, n-Butyl, sec.-Butyl, i-Butyl, t-Butyl steht,
$R^3$ für Methyl, Ethyl, Methoxy, Ethoxy, i-Propoxy, Methylthio, Ethylthio, n-Propylthio, sec.-Butylthio, Amino, Ethylamino, n-Propylamino, i-Propylamino, sec.-Butylamino, Dimethylamino, Diethylamino oder Phenyl steht und
X für Sauerstoff oder Schwefel steht.

4. Verbindungen der allgemeinen Formel (I) gemäß Anspruch 1,
in welcher
X für Schwefel steht.

5. Verfahren zur Herstellung der Pyrimidin(thiono)(thiol)-phosphor(phosphon)säure(amid)ester der allgemeinen Formel (I)

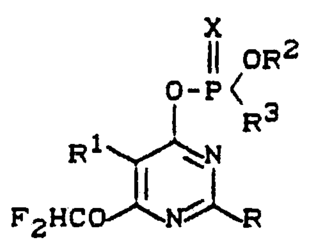

(I)

in welcher
R für Wasserstoff oder für einen gegebenenfalls substituierten Rest der Reihe Alkyl, Alkoxy, Alkylthio, Dialkylamino, Cycloalkyl und Aryl steht,
$R^1$ für Wasserstoff, Alkyl oder Halogen steht,
$R^2$ für Alkyl steht,
$R^3$ für Alkyl, Alkoxy, Alkylthio, Amino, Alkylamino, Dialkylamino oder Aryl steht und
X für Sauerstoff oder Schwefel steht,
dadurch gekennzeichnet, daß man entweder

a) 4-Difluormethoxy-6-hydroxy-pyrimidin-Derivate der Formel (II)

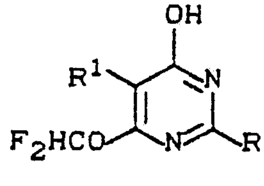

(II)

in welcher
$R^1$ und R die oben angegebene Bedeutung haben
oder das entsprechende Alkalimetall-, Erdalkalimetall- oder Ammoniumsalz mit Halogeniden der Formel (III)

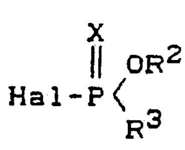

(III)

in welcher
$R^2$, $R^3$ und X die oben angegebene Bedeutung haben und

Hal für Halogen steht,
gegebenenfalls in Gegenwart eines Säureakzeptors und gegebenenfalls in Gegenwart eines Verdünnungsmittels umsetzt, oder

b) daß man
6-Hydroxy-pyrimidin-Derivate der Formel (IV)

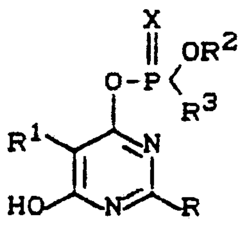

(IV)

in welcher
R, $R^1$, $R^2$, $R^3$ und X die oben angegebene Bedeutung haben
oder das entsprechende Alkalimetall-, Erdalkalimetall- oder Ammoniumsalz
mit Chlordifluormethan der Formel (V)
$Cl-CHF_2$ (V)
gegebenenfalls in Gegenwart eines Säureakzeptors und gegebenenfalls in Gegenwart eines Verdünnungsmittels umsetzt.

6. Schädlingsbekämpfungsmittel, gekennzeichnet durch einen Gehalt an mindestens einem Pyrimidin-(thiono)(thiol)-phosphor(phosphon)säure(amid)ester der Formel (I) gemäß den Ansprüchen 1 oder 5.

7. Verfahren zur Bekämpfung von Schädlingen, insbesondere von Insekten, Spinnentieren und Nematoden, dadurch gekennzeichnet, daß man Pyrimidin(thiono)(thiol)-phosphor(phosphon)säure(amid)ester der Formel (I) gemäß den Ansprüchen 1 oder 5 auf tierische Schädlinge und/oder ihren Lebensraum einwirken läßt.

8. Verwendung von Pyrimidin(thiono)(thiol)-phosphor(phosphon)säure(amid)ester der Formel (I) gemäß den Ansprüchen 1 oder 5 zur Bekämpfung von Schädlingen, insbesondere von Insekten, Spinnentieren und Nematoden.

9 . Verfahren zur Herstellung von Schädlingsbekämpfungsmitteln, dadurch gekennzeichnet, daß man Pyrimidin(thiono)(thiol)-phosphor(phosphon)säure(amid)ester der Formel (I) gemäß den Ansprüchen 1 oder 5 mit Streckmitteln und/oder oberflächenaktiven Mitteln vermischt.

Europäisches Patentamt

# EUROPÄISCHER RECHERCHENBERICHT

Nummer der Anmeldung

EP 90 10 7592

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 279 259 (BAYER AG)<br>* Insgesamt *<br>--- | 1,5,6-9 | C 07 F 9/6512<br>A 01 N 57/02 |
| A | FR-A-2 230 651 (ICI)<br>* Insgesamt *<br>----- | 1,5,6-9 | |
| | | | **RECHERCHIERTE SACHGEBIETE (Int. Cl.5)** |
| | | | C 07 F 9/00<br>A 01 N 57/00 |

Der vorliegende Recherchenbericht wurde für alle Patentansprüche erstellt

| Recherchenort | Abschlußdatum der Recherche | Prüfer |
|---|---|---|
| DEN HAAG | 17-08-1990 | OUSSET J-B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)